# EUROPÄISCHE PATENTANMELDUNG

(11) **EP 4 442 936 A1**
(43) Veröffentlichungstag der Anmeldung: **09.10.2024**
(21) Anmeldenummer: 23166940.9
(22) Anmeldetag: 06.04.2023
(51) Int. Cl.: E04H 6/18, B65G 1/04

(54) **SATTELAUFLIEGERHOCHREGALLAGER UND REGALBEDIENGERÄT**

(71) Anmelder: TruckTower GmbH, 76646 Bruchsal (DE)
(72) Erfinder: Hackbarth, Felix, 21337 Lüneburg (DE)
(74) Vertreter: Keil & Schaafhausen Patentanwälte PartGmbB

(57) **Zusammenfassung**

Die Erfindung betrifft ein Sattelaufliegerhochregallager mit einem Regalbediengerät sowie ein Verfahren zur Be- und Entladung des Hochregallagers mit Sattelaufliegern.

Aufgrund des stetig steigenden Güterverkehrs sind die Park- und Rastplätze für Lastkraftwagen (LKW), insbesondere zu Stoßzeiten, oftmals überfüllt. Es besteht Bedarf nach neuartigen Parkiervorrichtungen, die bei vergleichsweise geringer Flächenausnutzung eine große Anzahl an Park- und Rastplätzen bietet.

Die Erfindung löst dieses Problem mittels einem Hochregallager mit einem Regalbediengerät, umfassend ein Stahlgerüst und wenigstens ein Regalbediengerät, wobei das Hochregallager Lagerplätze aufweist und die Lagerplätze zur Einlagerung von Sattelaufliegern eingerichtet sind, dadurch, dass der Lagerplatz eine Stellfläche aufweist, die derart ausgebildet ist, dass lediglich die Aufstellpunkte des einzulagernden Sattelaufliegers auf der Stellfläche aufstehen. Hierdurch wird der Materialeinsatz für das Stahlgerüst des Hochregallagers auf ein Minimum reduziert.

## Beschreibung

Die Erfindung betrifft ein Hochregallager und ein Regalbediengerät zur Bedienung des Hochregallagers, insbesondere zur Be- und Entladung des Hochregallagers mit Sattelaufliegern, d. h., zur Einlagerung von Sattelaufliegern in ein Sattelauflieger-Hochregallager. Ferner betrifft die Erfindung ein Verfahren zur Be- und Entladung des Hochregallagers mit Sattelaufliegern.

Hochregallager zur Einlagerung verschiedener Gegenstände sind allgemein bekannt. Häufig werden (vollautomatisierte) Regalbediengeräte zur Be- und Entladung der Lagerplätze von Hochregallagern verwendet, wobei beispielsweise ein Verwaltungssystem die Be- und Entladung effizient steuert. Der Warentransport außerhalb der Lagersysteme erfolgt jedoch weitaus überwiegend per LKW, insbesondere per Sattelzug mit einer Sattelzugmaschine und einem Sattelauflieger, wobei die Fahrer gesetzlich zur Einhaltung ausreichender Ruhezeiten verpflichtet sind. Die Fahrer suchen daher regelmäßig Park- und Rastplätze entlang ihrer Fahrtrouten auf, um den gesetzlichen Erfordernissen Rechnung zu tragen. Aufgrund des stetig steigenden Güterverkehrs sind die Park- und Rastplätze, insbesondere zu Stoßzeiten, oftmals überfüllt. Der Ausbau der Rastplätze stellt die Betreiber vor große Herausforderung und ist aufgrund beschränkter Grundstücksflächen nicht immer möglich. Zudem führt die Bereitstellung größer Park- und Rastplätze zu einer verstärkten Flächenversiegelung, was insbesondere negative Folgen für das Ökosystem hat.

Aus diesem Grund besteht der Bedarf nach neuartigen Parkiervorrichtungen, die bei vergleichsweise geringer Flächenausnutzung eine große Anzahl an Park- und Rastplätzen bietet. Aus dem Stand der Technik, ist unter anderem eine Parkiervorrichtung für Lastwagen, im Weiteren kurz LKW genannt, gemäß dem erteilten europäischen Patent EP 20 174 241.8 vorbekannt, die sich diesem Problem widmet.

Ferner ist aus dem Stand der Technik gemäß der DE 100 16 121 A1 eine Speichervorrichtung für Fahrzeuge, insbesondere für LKW vorbekannt. Diese Vorveröffentlichung betrifft eine Parkiervorrichtung, insbesondere nach dem Paternoster-Prinzip. Gemäß diesem Prinzip werden Güter oder Plattformen mittels wenigstens einer endlos umlaufenden Kette befestigt. Der Einsatz eines Paternosters, erlaubt die Speicherung und Bewegung von Fahrzeugen, Gütern oder Personen in einem vertikal angeordneten Schacht. Der vorstehend bezeichneten Patentanmeldung liegt die Idee zugrunde, Fahrzeuge oder Güter innerhalb einer gemäß dem bereits erwähnten Paternosterprinzip aufgebauten Anordnung zu bewegen und/oder zu verwahren.

Ausgehend von der bekannten Problematik einer immer weiter zunehmenden Fahrzeugzahl, besteht die Notwendigkeit, Parkhäuser zu schaffen, in denen möglichst platzsparend eine möglichst große Anzahl von Fahrzeugen untergebracht werden können. In diesem Zusammenhang schlägt die DE 203 18 117 U1 eine konzentrische Anordnung von Parkplätzen und damit auch von Fahrzeugen auf wenigstens einer rotierenden Ringscheibe, vorzugsweise auf mehreren übereinander angeordneten Ringscheiben vor, deren radiale Breite zumindest dem Radstand der in diesem Parkhaus aufzunehmenden Fahrzeuge entspricht.

Weiter ist in diesem Zusammenhang aus der DE 20 2013 105 418 U1 ein automatisches Parkhaus mit einer Mehrzahl von zumindest vertikal, übereinander angeordneten Parkräumen und einer Fördervorrichtung zum Transport eines Fahrzeuges in einen jeweils freien Parkraum, sowie aus dem Parkraum heraus vorbekannt. Dabei sind die Parkräume derart angeordnet, dass diese mit ihren Öffnungen in Richtung eines bewegbaren Raumes ausgerichtet sind, der mittels einer Fördervorrichtung die Bewegung der Fahrzeuge in einen freien Parkraum bzw. auch aus dem besagten Parkraum heraus ermöglicht.

Außerdem ist aus der EP 3 350 389 B1 ein weiteres, weitgehend automatisches Parkhaus vorbekannt. Auch dieses Parkhaus weist mindestens eine Parkebene mit mehreren voneinander beabstandeten Parkräumen auf, wobei zumindest einzelnen Parkräumen je eine Abstellplattform zugeordnet ist, auf der beispielsweise ein Fahrzeug geparkt werden kann. Diese Abstellplattform ist einer Beförderungsvorrichtung zugeordnet, mit der die Fahrzeuge in einen freien Parkraum bewegt, sowie wieder aus diesem Parkraum heraus bewegt werden können. Die Transportvorrichtung wird über ein laufendes Förderband bewegt und erlaubt somit den Transport der zu parkenden Fahrzeuge.

Außerdem ist aus der internationalen Patentanmeldung WO 2013 0307 81 eine Parkiervorrichtung für Kraftwagen vorbekannt, umfassend eine Vielzahl von Paletten, von denen jede so konfiguriert ist, dass sie eine Last, wie z.B. ein Auto oder einen Lastwagen, tragen kann, sowie ein Vertikalförderer mit einer Anzahl von Endlosketten und einer Stützstruktur, die Lagerbuchten definiert, in denen die Paletten und Autos gelagert bzw. abgestellt werden können.

Ausgehend von diesem Stand der Technik, hat es sich die Erfindung zur Aufgabe gemacht, ein Hochregallager mit einem Regalbediengerät bereitzustellen, mit dem eine
- Verringerung der Zugriffszeit
- Verringerung des eingesetzten Materials
- Verringerung der Verschleißteile sowie
- Verringerung der Einzelteile

### erreicht wird.

Diese Aufgabe wird in einem ersten Aspekt durch ein Hochregallager gemäß Anspruch 1 gelöst. Ferner wird die Aufgabe durch ein Regalbediengerät gemäß dem nebengeordneten Anspruch 7 sowie durch den nebengeordneten Verfahrensanspruch 16 gelöst. Vorteilhafte Ausgestaltungen der Erfindung können den abhängigen Ansprüchen entnommen werden.

In einem ersten Aspekt der Erfindung handelt es sich um ein Hochregallager für Sattelauflieger, umfassend ein Stahlgerüst und wenigstens ein Regalbediengerät, wobei das Hochregallager Lagerplätze aufweist und die Lagerplätze zur Einlagerung von Sattelaufliegern eingerichtet sind. Das erfindungsgemäße Hochregallager zeichnet sich dadurch aus, dass der Lagerplatz eine Stellfläche aufweist, die derart ausgebildet ist, dass lediglich die Aufstellpunkte des einzulagernden Sattelaufliegers auf der Stellfläche aufstehen. Hierdurch wird der Materialeinsatz für das Stahlgerüst des Hochregallagers auf ein Minimum reduziert.

Nach einer ersten vorteilhaften Ausführungsform weist jeder Lagerplatz wenigstens vier Stellflächen auf, wobei die Stellflächen zwei Größen aufweisen, und wobei jeweils zwei Stellflächen gleichgroß sind. Vorzugsweise sind die jeweils kleineren Stellflächen zum wenigstens bereichsweisen Absetzen von Stützen eines Sattelaufliegers eingerichtet und die jeweils größeren Stellflächen zum wenigstens bereichsweisen Absetzen von Rädern des Sattelaufliegers. Folglich weist ein entsprechender Lagerplatz keine Vollfläche auf, wodurch erhebliche Material, Gewichts und Kosteneinsparungen möglich sind.

Ferner beträgt der Abstand von Stellflächen übereinander angeordneter Lagerplätze vorzugsweise wenigstens 4 m. Dabei sind sowohl die Abmessungen der Lagerplätze untereinander als auch die Abmessungen des RBG vorzugsweise zumindest so ausgestaltet, dass das Hochregallager für die in seinem Einsatzgebiet, beispielsweise in Europa, verwendeten Sattelauflieger geeignet sind.

In einer abermals vorteilhaften Ausgestaltung weist das Hochregallager am Lagerplatz Einrichtungen zur Führung der Zinken eines Regalbediengeräts auf, womit das Regalbediengerät selbst keine Führungseinrichtung benötigt, insbesondere in Form von Führungsrollen, um einen Sattelauflieger gezielt in den Lagerplatz einführen zu können, womit die Anzahl der beweglichen Teile weiter reduziert werden kann.

In einem zweiten Aspekt der Erfindung handelt es sich um ein Regalbediengerät (RBG) das eine mit einer Rahmenstruktur des RBG gekoppelte Handhabungseinheit aufweist. Die Rahmenstruktur kann beispielsweise aus verschieden angeordneten Streben bestehen und stellt einen im Wesentlichen steifen Grundkörper des RBG dar. Die Handhabungseinheit ist in wenigstens eine Raumrichtung horizontal verfahrbar ausgestaltet. Beispielsweise kann das RBG hierzu ein Fahrwerk aufweisen oder auf einem Schienensystem geführt werden. Hierdurch wird ermöglicht, dass das RBG beispielsweise entlang einer Zeile eines Hochregallagers verfahrbar ist. Eine Zeile eines Hochregallagers beschreibt dabei die horizontal nebeneinander angeordneten Lagerplätze, wobei die vertikal übereinander angeordneten Lagerplätze in einer Spalte angeordnet sind. Ferner ist die Handhabungseinheit entlang der Rahmenstruktur vertikal verfahrbar ausgestaltet. Die Rahmenstruktur kann hierfür beispielsweise eine Art Schienenführung aufweisen, sodass die Handhabungseinheit in vertikaler Richtung, d. h., entlang der Lagerplätze einer Spalte eines Hochregallagers, verfahrbar ist. Ferner ist die Handhabungseinheit relativ zu der Rahmenstruktur in Längsrichtung der Handhabungseinheit von wenigstens einer ersten Position in wenigstens eine zweite Position verfahrbar ausgestaltet. Wenn das RBG mit einem Hochregallager verwendet wird, verläuft die Längsrichtung der Handhabungseinheit vorzugsweise senkrecht zur Zeilen- und Spaltenrichtung des Hochregallagers.

Ein Verfahren der Position der Handhabungseinheit kann beispielsweise durch entsprechende Antriebe erfolgen, wobei hierdurch insbesondere ein Ein- und Ausfahren der Handhabungseinheit in Lagerplätze eines Hochregallagers ermöglicht wird, d. h., ein Verfahren relativ zu der Rahmenstruktur des RBG. Die erste Position stellt dabei eine nicht ausgefahrene Ausgangsposition, in der die Handhabungseinheit beispielsweise beabstandet von einem Hochregallager angeordnet ist, dar, wobei die zweite Position eine Position der Handhabungseinheit darstellt, bei der die Handhabungseinheit ausgefahren ist, d. h. beispielsweise in einen Lagerplatz eines Hochregallagers eingefahren ist.

Ferner weist die Handhabungseinheit des erfindungsgemäßen RBGs eine Hubeinheit sowie einen Gabelträger auf. Der Gabelträger erstreckt sich von der Hubeinheit weg in eine Längsrichtung der Handhabungseinheit und weist wenigstens zwei Zinken auf, die beispielsweise parallel zueinander in Querrichtung zueinander beabstandet angeordnet sein können. Während der Verwendung der Handhabungseinheit dienen die Zinken als Auflagefläche für die mit der Handhabungseinheit beförderten Gegenstände und können beispielsweise balkenartig ausgestaltet sein. Sofern es sich bei den Gegenständen um Sattelauflieger handelt, liegen beispielsweise die Räder zumindest bereichsweise auf den Zinken auf, wobei die Zinken längliche Tragelemente bilden. Das Profil der Zinken kann dabei bereichsweise verschieden sein und wird insbesondere in Abhängigkeit der zu befördernden Gegenstände ausgestaltet. Die Hubeinheit, die an einem Ende der Zinken angeordnet ist, ist dazu eingerichtet, eine Hubbewegung in vertikaler Richtung relativ zu dem Gabelträger auszuführen. Sofern ein Gegenstand auf der Hubeinheit aufliegt, kann dieser somit im Bereich der Hubeinheit relativ zu dem Gabelträger in vertikaler Richtung bewegt werden.

Für den Fall, dass es sich bei dem Gegenstand um einen Sattelauflieger handelt, weist dieser an einem Ende Räder und an einem anderen Ende einen Bereich zur Kupplung mit einer Sattelzugmaschine auf. In der Regel wird hierbei das sattelaufliegerseitige Kupplungselement durch einen Königszapfen gebildet, sodass der Sattelauflieger von der Hubeinheit des RBG im Bereich des Königszapfens angehoben werden kann. Dies ermöglicht, dass ein Sattelauflieger, der abgesattelt auf Rädern und Stützen steht, bereichsweise angehoben wird, wodurch sich die Stützen von ihrer Abstellfläche abheben und der Sattelauflieger auf der Hubeinheit und den Rädern aufliegt. Um den Sattelauflieger von einer Abstellfläche auf die Handhabungseinheit zu bewegen, kann die Handhabungseinheit beispielsweise unter den Sattelauflieger fahren. Die Hubeinheit hebt dann den Sattelauflieger im Bereich des Königszapfen an, sodass bei gelöster Bremse oder einem vergleichsweise reibungsarmen Untergrund der Sattelauflieger dann von der Abstellfläche auf die Handhabungseinheit bewegt, insbesondere gezogen, werden, indem das RBG und/oder die Handhabungseinheit in Längsrichtung der Handhabungseinheit verfahren wird. Hierdurch können abgesattelte Sattelauflieger von der Handhabungseinheit aufgenommen, transportiert und abgestellt werden. Die Handhabungseinheit als Teil des RBG ermöglicht somit die Aufnahme eines Sattelaufliegers zum Be- und Entladen eines Lagerplatzes eines Hochregallagers.

Nach einer Ausführungsform ist das Regalbediengerät in zwei Raumrichtungen horizontal verfahrbar ausgestaltet ist. Hierdurch ist es möglich, dass das RBG beispielsweise mit Hilfe eines Fahrwerks entlang der Lagerplätze eines Hochregallagers horizontal bewegt werden kann und somit verschiebende Lagerplätze einer Zeile des Hochregallagers anfahren kann. Ferner ermöglicht die verfahrbare Ausgestaltung in eine weitere Raumrichtung ein Verfahren senkrecht zur Zeilen- und Spaltenrichtung eines Hochregallagers, wodurch das RBG zu einer Zeile des Hochregallagers beabstandet werden kann. Sofern ein Hochregallager mit mehreren RBGs bedient wird, können die RBGs somit aneinander vorbeifahren und jeden Lagerplatz einer Zeile ansteuern ohne sich gegenseitig zu blockieren.

Nach einer weiteren Ausführungsform ist die Handhabungseinheit in der ersten Position relativ zu der Rahmenstruktur mittig angeordnet, wobei die Rahmenstruktur insbesondere vier sich in vertikaler Richtung erstreckende Streben aufweist. Eine mittige Anordnung hat dabei insbesondere zum Ziel, dass die auf den Gabelträger in der zweiten Position wirkenden Hebelkräfte, beispielsweise beim Aufladen eines Sattelaufliegers, reduziert werden können, indem die Handhabungseinheit von der ausgefahrenen zweiten Position weiter in die Rahmenstruktur der Handhabungseinheit eingefahren. Ferner können die Streben zur Führung der Handhabungseinheit bei einem Verfahren in vertikaler Richtung dienen.

Ferner kann die Hubeinheit eine Sattelkupplung aufweisen. Die Sattelkupplung ermöglicht dabei eine Kupplung zwischen einem Sattelauflieger und der Hubeinheit, sodass der Sattelauflieger im Bereich der Hubeinheit nach einem Einkuppeln nicht mehr frei beweglich ist.

Zudem kann die Sattelkupplung dazu eingerichtet sein, eine formschlüssige oder kraftschlüssige Verbindung mit einem Königszapfen eines Sattelaufliegers einzugehen, vergleichbar mit einer Kupplung zwischen einem Sattelauflieger und einer Sattelzugmaschine.

Zusätzlich weist die Handhabungseinheit in einer alternativen Ausführungsform eine Länge, d.h., in Längsrichtung, von mehr als 10 m und weniger als 16.5 m, vorzugsweise von weniger als 14 m, und/oder eine Breite, d. h., in Querrichtung, von mehr als 2 m und weniger als 3 m, vorzugweise von weniger als 2.6 m, auf.

Ferner können die Zinken zumindest bereichsweise ein Doppel-T-Profil aufweisen. Wenngleich alternative Profile denkbar sind, ermöglicht ein Doppel-T-Profil eine einfache Möglichkeit Leitungen und Kabel teilweise geschützt und dennoch zugänglich entlang der Zinken zu verlegen. Hierdurch können insbesondere aufwändige Maßnahmen, beispielsweise ein Zerlegen der Zinken, für die Wartung vermieden werden.

Nach einer alternativen Ausführungsform weisen die Zinken jeweils wenigstens einen Keil auf, der insbesondere dazu eingerichtet ist unter Räder eines Sattelaufliegers geschoben zu werden. Beispielsweise kann der Keil hierfür entlang der Zinken verschiebbar angeordnet sein, wobei die Beabstandung der Zinken vorzugsweise geringer ist, als die Spurbreite des Sattelaufliegers, und wobei die Keile entsprechend der Spurbreite voneinander beabstandet sind, sodass die Keile entlang der Zinken unter die Räder geschoben werden können. Alternativ kann die Handhabungseinheit eine zusätzliche Vorrichtung, beispielsweise Greifer oder in Querrichtung der Zinken ausfahrbare Bolzen oder einer Tragfläche, beispielsweise eine Palette, zum Anheben von Rädern eines Sattelaufliegers aufweisen. Die Greifer und die Bolzen können dabei die Räder direkt erfassen oder gegen die Innenseiten der Räder gepresst werden. Alternativ kann der Sattelauflieger mit den Rädern auf der Tragfläche, beispielsweise der Palette, abgestellt werden, sodass die Zinken der Handhabungseinheit die Tragfläche ergreifen, beispielsweise indem sie in die Tragfläche einfahren, und diese anheben, beispielsweise indem die Zinken die Tragfläche durch eine Bewegung der Handhabungseinheit in vertikaler Richtung anheben. Derartige zusätzliche Vorrichtungen sind insbesondere dann hilfreich, wenn der Sattelauflieger von einem Untergrund auf die Handhabungseinheit gehoben werden soll und nicht, wie oben beispielsweise in Bezug auf einen reibungsarmen Untergrund beschrieben, auf die Handhabungseinheit gezogen werden soll.

In einem dritten und letzten Aspekt der Erfindung handelt es sich um ein Verfahren zur Bedienung eines erfindungsgemäßen Hochregallagers mittels einem erfindungsgemäßen Regalbediengeräts zur Be- und Entladung des Hochregallagers mit Sattelaufliegern. Das Verfahren umfasst dabei die folgenden Schritte:
- Einfahren eines Sattelzugs mit einer Sattelzugmaschine und einem Sattelauflieger mit einem Königszapfen in das Hochregallager;
- Absatteln des Sattelaufliegers;
- Ausfahren der Sattelzugmaschine aus dem Hochregallager;
- Aufsatteln des Sattelaufliegers auf eine Handhabungseinheit des Regalbediengeräts;
- Alternativ zu den vorgenannten Punkten: Einfahren eines Eisenbahnwaggons beladen mit einem Sattelauflieger mit einem Königszapfen in das Hochregallager;
- Ermitteln eines Lagerplatzes zur Einlagerung des Sattelaufliegers;
- Anheben des Königszapfens des Sattelaufliegers mit einer Hubeinheit;
- Bewegen der Handhabungseinheit relativ zum Hochregellager, insbesondere auch durch Relativbewegung des Regalbediengeräts zum Hochregallager;
- Einfahren der Handhabungseinheit in einen Lagerplatz; und
- Absetzen des Sattelaufliegers auf dem Lagerplatz.

Vorzugsweise fährt der Sattelzug zunächst in eine Einfahrt des Hochregallagers und sattelt hier die Sattelzugmaschine von dem Sattelauflieger ab. Das Einfahren in das Hochregallager kann auch ein Einfahren in wenigstens ein RBG bedeuten, das Teil des Hochregallagers ist. Sobald der Sattelauflieger abgesattelt ist, steht der Sattelauflieger auf seinen Rädern und Stützen, wobei die Sattelzugmaschine den Sattelauflieger zurücklässt und beispielsweise auf einen Parkplatz fährt. Anschließend wird der Sattelauflieger auf die Handhabungseinheit des RBG aufgesattelt, wozu die Handhabungseinheit ggf. unter den Sattelauflieger gefahren wird, sofern der Sattelauflieger nicht bereits direkt in dem RBG abgestellt wurde. Der Sattelauflieger kann dabei mit einer Sattelkupplung der Hubeinheit der Handhabungseinheit über den Königszapfen gekuppelt werden. Die Handhabungseinheit bzw. die Hubeinheit hebt anschließend den Königszapfen des Sattelaufliegers. Gegebenenfalls werden zudem die Räder mit einer Vorrichtung entsprechend der vorangegangenen Beschreibung angehoben. Anschließend bewegt die Handhabungseinheit den Sattelauflieger zu einem entsprechenden Lagerplatz des Hochregallagers. Anschließend fährt die Handhabungseinheit in den Lagerplatz ein und setzt den Sattelauflieger auf dem Lagerplatz, beispielsweise auf den entsprechenden Stellflächen ab.

In einer ersten vorteilhaften Ausgestaltung des Verfahrens können zur Ermittlung eines Lagerplatzes zur Einlagerung des Sattelaufliegers verschiedene Parameter einzeln oder in beliebiger Kombination, beispielsweise mit Hilfe eines Verwaltungssystems, berücksichtigt werden. Die Parameter umfassen insbesondere das Gewicht des Sattelaufliegers, die Größe des Sattelaufliegers, die Anzahl zu erwartender Sattelzüge, die geplanten Ankunftszeitpunkte der Sattelzüge, die voraussichtlichen Abfahrtszeitpunkte eingelagerter Sattelauflieger oder die aktuelle und die erwartete Auslastung der Lagerplätze. Hierdurch kann eine möglichst energieeffiziente Nutzung des Hochregallagers gewährleistet sowie schnelle Zugriffszeiten ermöglicht werden.

Nachfolgend wird die Erfindung anhand von einigen Ausführungsbeispielen näher erläutert.

Es zeigt:
- Fig. 1A: eine perspektivische Ansicht eines erfindungsgemäßen Regalbediengeräts,
- Fig. 1B: eine perspektivische Ansicht eines erfindungsgemäßen Regalbediengeräts gemäß Fig. 1A mit einem Sattelauflieger,
- Figur 2: eine perspektivische Ansicht eines Hochregallagers ohne Regalbediengerät,
- Fig. 3A: eine Seitenansicht einer mit Keilen versehenen Handhabungseinheit eines erfindungsgemäßen Regalbediengeräts in einer ersten Position,
- Fig. 3B: eine Seitenansicht der Handhabungseinheit gemäß Fig. 3A in einer zweiten Position,
- Fig. 4: eine perspektivische Ansicht eines in einem Lagerplatz eines Hochregallagers eingelagerten Sattelaufliegers, wobei die Räder des Sattelaufliegers auf einer Tragfläche stehen,
- Fig. 5: eine perspektivische Ansicht eines in einem Lagerplatz eines Hochregallagers eingelagerten Sattelaufliegers, wobei die Räder und Stützen auf entsprechenden kleinen und großen Stellflächen stehen;
- Fig. 6: in Seitenansicht eine alternative Ausführungsform der Handhabungseinheit mit Bolzen, um die Räder des Sattelaufliegers anzuheben;
- Fig. 7: in Seitenansicht ein Detail der Handhabungseinheit gemäß Fig. 3A; und
- Fig. 8: in Seitenansicht ein Detail der Handhabungseinheit gemäß Fig. 4.

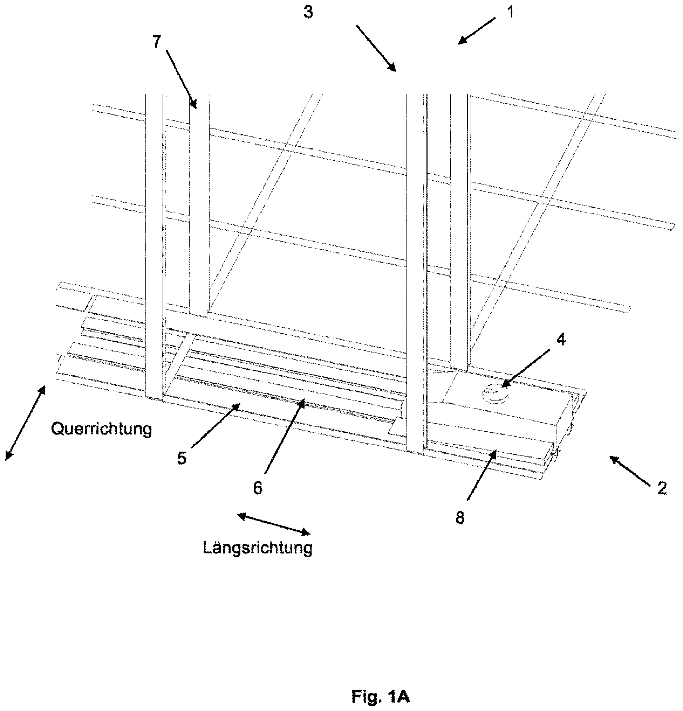

Figur 1A zeigt ein erfindungsgemäßes Regalbediengerät (RBG) 1 mit einer Handhabungseinheit 2 und einer Rahmenstruktur 3. Die Handhabungseinheit 2 weist eine Hubeinheit 4 auf, von der sich ein Gabelträger 5 in Längsrichtung der Handhabungseinheit 2 erstreckt. Die Hubeinheit weist auf ihrer oberen relativ zu der Handhabungseinheit bewegbaren Seite eine nicht näher dargestellte Sattelkupplung zur Aufnahme eines Königszapfens auf. Die Sattelkupplung kann dabei seitlich verschwenkbar oder verschiebbar ausgeführt sein. Ferner ist die Rahmenstruktur 3 in wenigstens eine Raumrichtung horizontal verfahrbar ausgestaltet, d. h., beispielsweise in Querrichtung. Ferner ist die Handhabungseinheit 2 in vertikaler Richtung, d. h., senkrecht zur Quer- und Längsrichtung, entlang der Rahmenstruktur 3 verfahrbar ausgestaltet. Zudem ist die Handhabungseinheit 2 relativ zu der Rahmenstruktur 3 in Längsrichtung der Handhabungseinheit 2 von einer ersten Position in eine zweite Position verfahrbar ausgestaltet. Der Gabelträger 5 erstreckt sich von der Hubeinheit 4 in Längsrichtung der Handhabungseinheit 2 und weist wenigstens zwei in Querrichtung zueinander beabstandete Zinken 6 auf.

Die in Figur 1A schemenhaft dargestellte Rahmenstruktur 3 hat vier Streben 7, die sich in vertikaler Richtung erstrecken. Die Handhabungseinheit 2 ist entlang dieser Rahmenstruktur 3 in vertikaler Richtung verfahrbar, sodass Lagerplätze in verschiedenen Höhen des Hochregallagers, d. h., in Spaltenrichtung, angesteuert werden können. Gleichzeitig dient die Verfahrbarkeit in eine Raumrichtung horizontal, beispielsweise in Querrichtung, dem Anfahren von verschiedenen Lagerplätzen einer Zeile eines Hochregallagers.

Die in Figur 1A dargestellte Ausführungsform eines RBG 1 weist zudem Keile 8 auf, die beispielsweise entlang der Zinken 6 in Längsrichtung verfahren werden können und so beispielsweise unter die Räder eines Sattelaufliegers geschoben werden können, um diese anzuheben. Zudem ist die Hubeinheit 4 dazu eingerichtet, eine Hubbewegung in die vertikale Richtung relativ zu dem Gabelträger 5 auszuführen.

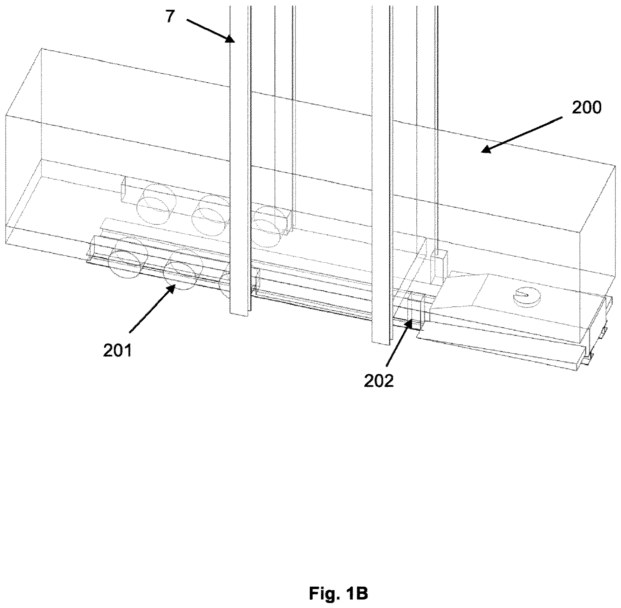

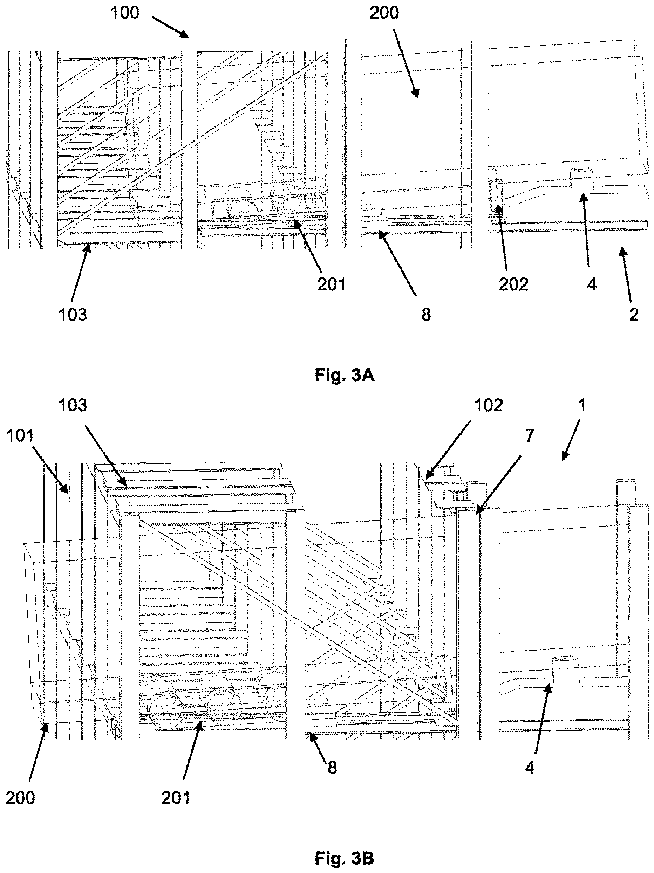

In Figur 1B ist das Regalbediengerät 1 gemäß Figur 1A mit einem Sattelauflieger 200 dargestellt, wobei der Sattelauflieger 200 mit seinen Rädern 201 auf den Zinken 6 der Handhabungseinheit 2 aufliegt und die Keile 8 noch nicht unter die Räder 201 geschoben wurden. Zudem liegt der vordere Teil des Sattelaufliegers 200 auf der Hubeinheit 4 auf, die in dem in Figur 1B dargestellten Zustand, im Gegensatz zu den in den Figuren 3A und 3B dargestellten Zuständen, den Sattelauflieger 200 nicht angehoben hat.

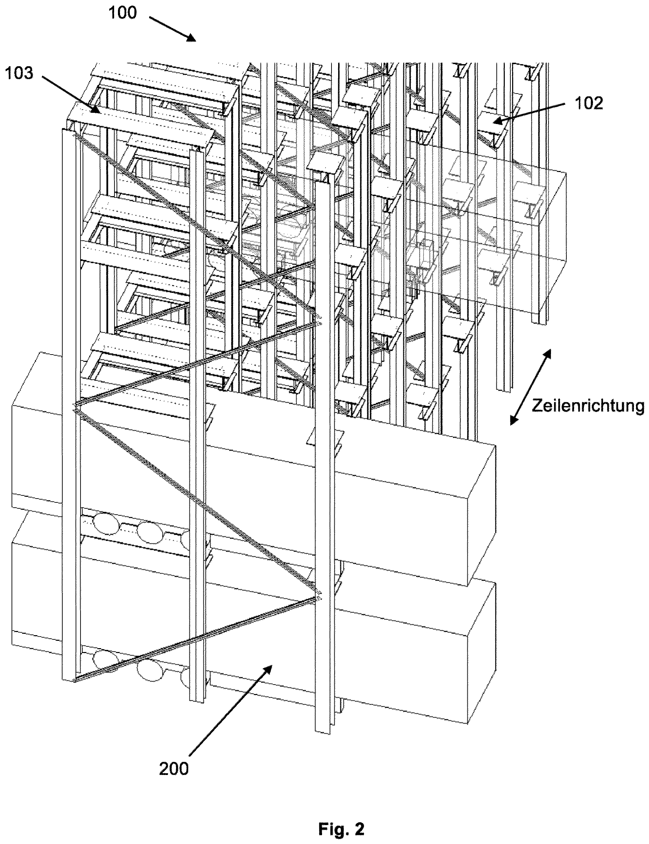

Figur 2 zeigt ein Hochregallager 100 mit einer Vielzahl an Lagerplätzen 101, wobei die Lagerplätze 101 jeweils insgesamt vier Stellflächen 102 und 103 mit verschiedenen Größen aufweisen. Die Lagerplätze 101 sind dabei horizontal in Zeilenrichtung, d. h., nebeneinander, und vertikal in Spaltenrichtung, d. h., übereinander, angeordnet. Die kleineren Stellflächen 102 dienen dabei zur Auflage für die Stützen 202 eines Sattelaufliegers 200 und die größeren Stellflächen 103 zur Auflage für die Räder 201 eines Sattelaufliegers 200.

In dem in Figur 2 dargestellten Zustand befinden sich zwei Sattelauflieger 200 in dem Hochregallager 100. Das zuvor in Figur 1A dargestellte RBG 1 und in Figur 2 nicht gezeigte RBG 1 ist für die Bedienung eines derartigen Hochregallagers 100 geeignet.

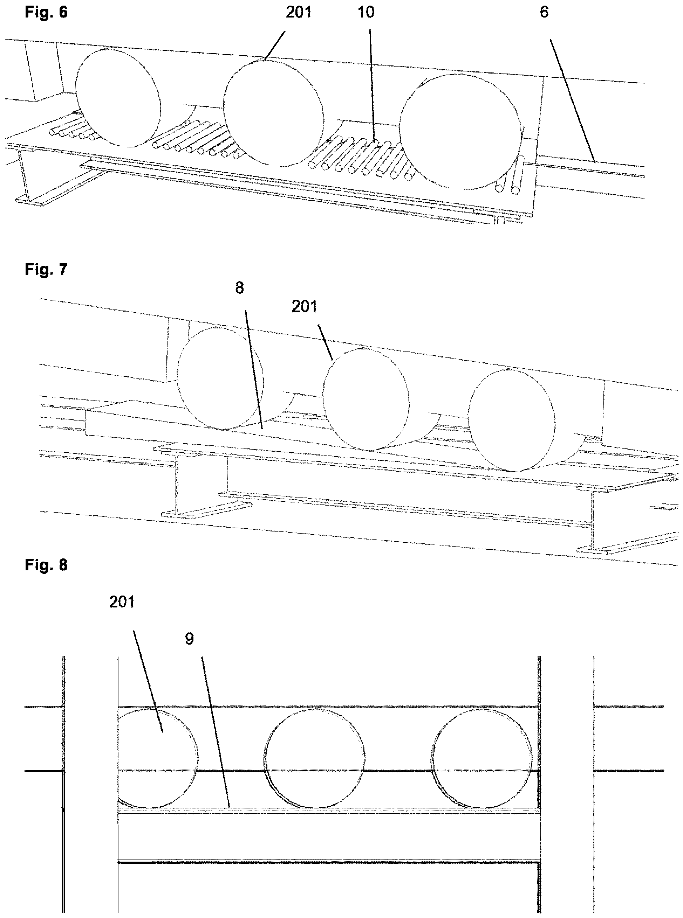

In den Figuren 3A und 3B ist eine Handhabungseinheit 2 mit einem durch die Hubeinheit 4 angehobenen Sattelauflieger 200 dargestellt. Entsprechend sind die Stützen 202 des Sattelaufliegers 200 von den Zinken 6 beabstandet. Zudem sind die in Figur 7 vergrößert dargestellten Keile 8 zumindest teilweise unter die Räder 201 des Sattelaufliegers 200 geschoben und dadurch ebenfalls angehoben. Zudem befindet sich die Handhabungseinheit 2 in dem in Figur 3A dargestellten Zustand in einer ersten Position, in der vorliegend die Handhabungseinheit 2 in Bezug auf die Rahmenstruktur 3 mittig angeordnet ist. In dem Zustand in Figur 3B gezeigten Zustand ist die Handhabungseinheit 2 dann in eine zweite Position überführt dargestellt, sodass die Gabelträger 5 weiter in den Lagerplatz 101 eingefahren sind, um hier den Sattelauflieger 200 ablegen zu können.

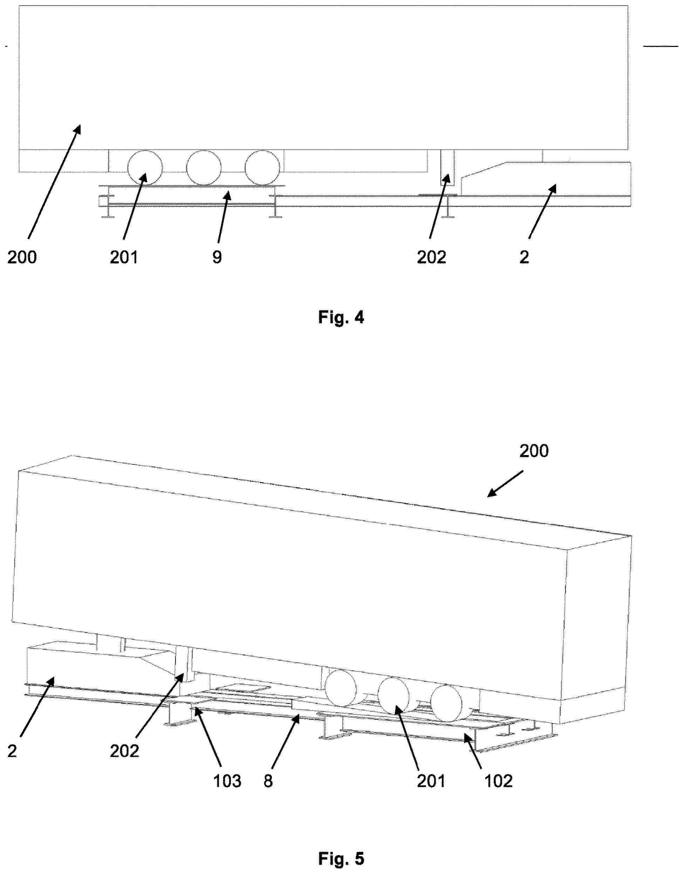

Figur 4 zeigt eine alternative Möglichkeit zum Anheben der Räder 201 eines Sattelaufliegers 200, wobei der Sattelauflieger 200 in einem eingelagerten Zustand dargestellt ist. Die in Figur 4 gezeigte Möglichkeit zeigt eine palettenartige Tragfläche 9, auf der die Räder 201 eines Sattelaufliegers 200 abgestellt sind. Diese ist in Figur 8 im Detail dargestellt. Die Zinken 6 der Handhabungseinheit 2 sind in einer teilweise zurückgefahrenen Position dargestellt, können aber in einer zweiten Position in bzw. unter die Tragfläche 9 bewegt werden und durch eine Bewegung der Handhabungseinheit 2 in vertikaler Richtung die Tragfläche 9 anheben. Durch eine Hubbewegung mit Hilfe der Hubeinheit 4 kann der Sattelauflieger 200 auch im vorderen Bereich angehoben werden und so aus dem Lagerplatz des Hochregallagers entnommen werden.

Eine weitere Alternative zum Anheben der Räder 201 eines Sattelaufliegers 200 ist in Figur 6 gezeigt. Hierbei sind die Zinken 6 des Gabelträgers 5 zumindest bereichsweise mit seitlich ausfahrbaren Bolzen 10 versehen, um die Räder 201 anzuheben. Dabei werden die Bolzen 10 entweder mit definierten Abständen ausgefahren, bis sie entweder voll ausgefahren unter den Rädern 201 sind oder gegen die Innenseiten der Räder 201 gestoßen sind. Nach einer weiteren Alternative können spezielle Bolzen und Halterungen ein Anheben über die Räder 201 gewährleisten.

Abschließend zeigt Figur 5 einen eingelagerten Sattelauflieger 200 bei dem die Stützen 202 auf den kleineren Stellflächen 102 und die Räder 201 auf den größeren Stellflächen 103 abgestellt sind.

Eine derartige Lagerung von Sattelaufliegern 200 in einem Hochregallager 100 unter Verwendung eines RBG 1 ermöglicht somit die Einlagerung einer Vielzahl an Sattelaufliegern 200. Vorteilhaft gegenüber ebenen Parkflächen erweist sich dabei unter anderem eine deutlich verringerte Versiegelung der Bodenfläche. Gleichzeitig reduziert der gewählte strukturelle Aufbau des Hochregallagers 100, bei dem die Stellflächen 102 und 103 keine den ganzen Lagerplatz ausfüllende Vollflächen darstellen, den Materialeinsatz. Ferner weist das Gesamtsystem nur eine geringe Anzahl an Einzelteilen auf und ist dabei vergleichsweise einfach zu fertigen. Die erfindungsgemäßen RBGs 1 ermöglichen zudem die Einlagerung von Sattelaufliegern 200 in ein Hochregallager 100, wobei die erfindungsgemäße Ausgestaltung des RBGs 1 unter anderem die Zugriffszeiten für ein Hochregallager gering hält.

Zur Verbindung eines Sattelaufliegers 200 wird folglich eine Handhabungseinheit 2 mit ihrer vertikal verfahrbaren und seitlich toleranten Sattelkupplung wie eine Art Schlitten unter den Königszapfen des abgestellten Sattelaufliegers gefahren und stellt eine formschlüssige (alternativ auch kraftschlüssige) Verbindung zwischen RBG 1 und Sattelauflieger 200 für das Hantieren her. Die bisherigen Auflagepunkte der Stützen 202 können nun über ein Heben der Sattelkupplung übernommen werden. Die Übernahme der Radauflagepunkte kann je nach Einsatzfall wie oben beschrieben auf verschiedene Arten realisiert werden.

Die kann entweder direkt am Abstellort erfolgen, indem, falls die Räder gebremst sind, aus den Zinken 6 seitlich Bolzen 10 ausfahren, um die Räder 201 anzuheben (Fig. 6), indem ein Keil 8 mit dem Schlitten unter die Räder 201 geschoben wird (Fig. 7), indem eine Minimalpalette 9, welche nur unter den Rädern 201 liegt, mit der Handhabungseinheit 2 gekoppelt wird (Fig. 8), oder indem eine Art Greifer unter die einzelnen Räder 201 geschoben wird, um diese dann von vorne und hinten zu fassen und daran anheben zu können. Falls die Räder ungebremst sind oder der Untergrund entsprechend reibungsarm gestaltet ist, beispielsweise durch Rollen, entsprechendes Material oder dergleichen, kann der ganze Sattelauflieger 200 von der Handhabungseinheit 2 gezogen bzw. geschoben werden. Die Bremswirkung der Räder 201 kann entweder durch Kopplung der Sattelaufliegerversorgung an die Handhabungseinheit 2 oder manuelle Freigabe der Räder gelöst werden. Für die Führung der Achsen des Sattelaufliegers beim Hantieren geben entweder die Unterlage oder seitlich angebrachte Führungen die Richtung vor.

Die Handhabungseinheit 2 des RBG 1 kann dann den so übernommenen Sattelauflieger 200 horizontal und vertikal bis zum gewünschten Ablageplatz verfahren. Dabei wird der Ablageplatz vorzugsweise über eine Kombination aus Gewicht, erwarteten Fahrzeugen, Ankunfts- und Abfahrtszeitpunkt, Dimension, aktueller und erwarteter Auslastung oder Untermengen daraus ermittelt, um möglichst energieeffizient und schnell den geforderten Durchsatz zu realisieren.

Die Handhabungseinheit 2 kann innerhalb des Hochregallagers 100 geführt sein, so dass sich die vertikalen Kräfte gut von dem Hochregallager 100 zu dem RBG 1 überführen lassen. Bei einer bevorzugten Ausführungsform lässt sich noch weiter Material einsparen, wenn auf die vordersten Stützen des Hochregallagers 100 verzichtet wird, da diese nur jeweils während des Ein- und Auslagerungsvorgangs belastet werden. Damit der Verzicht nicht in einer massiveren Ausführung des RBG 1 resultiert, kann dieses dann so ausgeführt werden, dass es auch in Regalfachrichtung verfahren kann, um so die vertikale Lastübernahme momentenarm zu gewährleisten.

Das erfindungsgemäße Regalbediengerät 1 ist in gleicher Weise auch für ganze Sattelzüge nutzbar, wenn für die hinzukommende Sattelzugmaschine eine Lastübernahme wie für die Achsen des Sattelaufliegers vorgesehen wird.

### BEZUGSZEICHENLISTE

- 1: Regalbediengerät (RBG)
- 2: Handhabungseinheit
- 3: Rahmenstruktur
- 4: Hubeinheit mit Sattelkupplung
- 5: Gabelträger
- 6: Zinken
- 7: Strebe
- 8: Keil
- 9: Tragfläche
- 10: Bolzen

- 100: Hochregallager
- 101: Lagerplätze
- 102: kleine Stellflächen
- 103: große Stellflächen

- 200: Sattelauflieger
- 201: Räder
- 202: Stützen

## Patentansprüche

1. Hochregallager (100), insbesondere Parkiervorrichtung für Sattelauflieger (200), umfassend ein Stahlgerüst und wenigstens ein Regalbediengerät (1), wobei das Hochregallager (100) Lagerplätze (101) aufweist und die Lagerplätze (101) zur Einlagerung von Sattelaufliegern (200) eingerichtet sind,
**dadurch gekennzeichnet, dass** der jeweilige Lagerplatz (101) eine Stellfläche (102, 103) aufweist, die derart ausgebildet ist, dass lediglich die Aufstellpunkte des einzulagernden Sattelaufliegers (200) auf der Stellfläche des Lagerplatzes (101) aufstehen.

2. Hochregallager nach Anspruch 1, **dadurch gekennzeichnet, dass** jeder Lagerplatz (101) wenigstens vier Stellflächen (102, 103) aufweist, wobei die Stellflächen (102, 103) wenigstens zwei Größen aufweisen und jeweils zwei Stellflächen (102, 103) gleichgroß sind.

3. Hochregallager nach Anspruch 1 oder 2, **dadurch gekennzeichnet, dass** die jeweils kleinere Stellfläche (102) zum Absetzen von Stützen (203) eines Sattelaufliegers (200) eingerichtet sind und die jeweils größeren Stellflächen (103) zum Absetzen von Rädern des Sattelaufliegers (200) eingerichtet sind.

4. Hochregallager nach Anspruch 3, **dadurch gekennzeichnet, dass** der Abstand von Stellflächen (102, 103) übereinander angeordneter Lagerplätze (101) wenigstens 4 m beträgt.

5. Hochregallager nach einem der Ansprüche 1 bis 4, **dadurch gekennzeichnet, dass** der Lagerplatz (101) Einrichtungen zur Führung von Zinken (6) eines Regalbediengeräts (1) aufweist.

6. Hochregallager nach Anspruch 5, **dadurch gekennzeichnet, dass** das Regalbediengerät (1) dazu eingerichtet ist, dass die Aufnahme beim Einlagern oder die Ablage beim Auslagern der Sattelauflieger (200) direkt vom oder auf einen Eisenbahnwaggon erfolgt.

7. Regalbediengerät (1) zur Bedienung eines Hochregallagers (100) nach wenigstens einem der vorhergehenden Ansprüchen, umfassend eine mit einer Rahmenstruktur (3) gekoppelte Handhabungseinheit (2), wobei die Rahmenstruktur in wenigstens eine Raumrichtung horizontal verfahrbar ausgestaltet ist, wobei die Handhabungseinheit entlang der Rahmenstruktur vertikal verfahrbar ausgestaltet ist, und wobei die Handhabungseinheit relativ zu der Rahmenstruktur in einer Längsrichtung der Handhabungseinheit von einer ersten Position in wenigstens eine zweite Position verfahrbar ausgestaltet ist,
**dadurch gekennzeichnet, dass** die Handhabungseinheit eine Hubeinheit (4) mit einer, vorzugsweise quer zur Längsrichtung der Handhabungseinheit beweglich gelagerten, Sattelkupplung zur Aufnahme eines Königszapfens eines Sattelaufliegers (200) sowie einen Gabelträger (5) aufweist, wobei sich der Gabelträger von der Hubeinheit weg in die Längsrichtung der Handhabungseinheit erstreckt und wenigstens zwei in Querrichtung zueinander beabstandete Zinken (6) aufweist, und wobei die Hubeinheit dazu eingerichtet ist, eine Hubbewegung in die vertikale Richtung relativ zu dem Gabelträger auszuführen.

8. Regalbediengerät nach Anspruch 7, **dadurch gekennzeichnet, dass** das Regalbediengerät in zwei Raumrichtungen horizontal verfahrbar ausgestaltet ist.

9. Regalbediengerät nach Anspruch 7 oder 8, **dadurch gekennzeichnet, dass** die Handhabungseinheit in der ersten Position relativ zu der Rahmenstruktur mittig angeordnet ist, wobei die Rahmenstruktur insbesondere vier sich in vertikaler Richtung erstreckende Streben (7) aufweist.

10. Regalbediengerät nach einem der vorhergehenden Ansprüche 7 bis 9, **dadurch gekennzeichnet, dass** die Handhabungseinheit einen mit einem Sattelauflieger (200) koppelbaren Druckluftanschluss zum Lösen von Bremsen des Sattelaufliegers aufweist.

11. Regalbediengerät nach Anspruch 10 für Sattelauflieger (200) mit einem Königszapfen, **dadurch gekennzeichnet, dass** die Sattelkupplung dazu eingerichtet ist, eine formschlüssige oder kraftschlüssige Verbindung mit dem Königszapfen einzugehen.

12. Regalbediengerät nach einem der vorhergehenden Ansprüche 7 bis 11, **dadurch gekennzeichnet, dass** die Handhabungseinheit eine Länge von mehr als 10 m und weniger als 16.5 m, vorzugsweise von weniger als 14 m, und/oder eine Breite von mehr als 2 m und weniger als 3 m, vorzugweise von weniger als 2.6 m, aufweist.

13. Regalbediengerät nach einem der vorhergehenden Ansprüche 7 bis 12, **dadurch gekennzeichnet, dass** die Zinken zumindest bereichsweise ein Doppel-T-Profil aufweisen.

14. Regalbediengerät nach einem der vorhergehenden Ansprüche 7 bis 13, **dadurch gekennzeichnet, dass** die Zinken jeweils wenigstens einen Keil (8) aufweisen, der insbesondere dazu eingerichtet ist unter Räder (201) eines Sattelaufliegers geschoben zu werden.

15. Regalbediengerät nach einem der vorhergehenden Ansprüche 7 bis 14, **dadurch gekennzeichnet, dass** die Handhabungseinheit wenigstens eine zusätzliche Vorrichtung, beispielsweise Greifer oder in Querrichtung der Zinken ausfahrbare Bolzen oder eine Tragfläche (9), beispielsweise eine Palette, zum Anheben von Rädern eines Sattelaufliegers aufweist.

16. Verfahren zur Bedienung eines Hochregallagers gemäß einem der Ansprüche 1 bis 6 mit einem Regalbediengerät gemäß einem der Ansprüche 6 bis 15 zur Be- und Entladung des Hochregallagers mit Sattelaufliegern, wobei das Verfahren die folgenden Schritte aufweist:
- Einfahren eines Sattelzugs, der eine Sattelzugmaschine und einen Sattelauflieger mit einem Königszapfen aufweist, in das Hochregallager; Absatteln des Sattelaufliegers; Ausfahren der Sattelzugmaschine aus dem Hochregallager; oder Einfahren eines Eisenbahnwaggons beladen mit einem Sattelauflieger mit einem Königszapfen in das Hochregallager;
- Aufsatteln des Sattelaufliegers auf eine Handhabungseinheit des Regalbediengeräts;
- Ermitteln eines Lagerplatzes zur Einlagerung des Sattelaufliegers;
- Anheben des Königszapfens des Sattelaufliegers mit einer Hubeinheit;
- Anheben von Rädern des Sattelaufliegers;
- Bewegen der Handhabungseinheit relativ zum Hochregellager, insbesondere auch durch Relativbewegung des Regalbediengeräts zum Hochregallager;
- Einfahren der Handhabungseinheit in einen Lagerplatz; und
- Absetzen des Sattelaufliegers auf dem Lagerplatz.

17. Verfahren nach Anspruch 16, **dadurch gekennzeichnet, dass** zur Ermittlung eines Lagerplatzes zur Einlagerung des Sattelaufliegers verschiedene Parameter einzeln oder in beliebiger Kombination berücksichtigt werden, wobei die Parameter insbesondere das Gewicht des Sattelaufliegers, die Größe des Sattelaufliegers, die Anzahl zu erwartender Sattelzüge, die geplante Ankunftszeitpunkte der Sattelzüge, die voraussichtlichen Abfahrtszeitpunkte eingelagerter Sattelauflieger oder die aktuelle und die erwartete Auslastung der Lagerplätze berücksichtigen.
